(19) Europäisches Patentamt
European Patent Office
Office européen des brevets

(11) **EP 2 416 111 A1**

(12) **EUROPÄISCHE PATENTANMELDUNG**

(43) Veröffentlichungstag:
**08.02.2012  Patentblatt 2012/06**

(51) Int Cl.:
*G01B 9/02* *(2006.01)*    *G02F 1/01* *(2006.01)*

(21) Anmeldenummer: **10171875.7**

(22) Anmeldetag: **04.08.2010**

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**BA ME RS**

(71) Anmelder: **Bayer MaterialScience AG**
**51368 Leverkusen (DE)**

(72) Erfinder: **Die Erfindernennung liegt noch nicht vor**

(54) **Schaltbares optisches Element für ein Interferometer**

(57)     Die vorliegende Erfindung betrifft ein optisches Element für ein Interferometer. Sie betrifft weiterhin ein Interferometer, welches ein erfindungsgemäßes optisches Element umfasst, ein Verfahren zum Betreiben eines solchen Interferometers sowie die Verwendung eines erfindungsgemäßen optischen Elements. Im optisches Element (1) für ein Interferometer umfasst das optische Element (1) wenigstens ein dielektrisches Elastomer (2) sowie zwei an gegenüberliegenden Seiten des dielektrischen Elastomeren (2) angeordnete, zumindest teilweise transparente Elektroden (3, 4) und der Abstand zwischen den beiden Elektroden (3, 4) ist durch Anlegen einer elektrischen Spannung an die Elektroden (3, 4) veränderbar. Solche optischen Elemente eignen sich insbesondere für Fabry-Pérot-Interferometer.

FIG. 1

EP 2 416 111 A1

**Beschreibung**

Die vorliegende Erfindung betrifft ein optisches Element für ein Interferometer. Sie betrifft weiterhin ein Interferometer, welches ein erfindungsgemäßes optisches Element umfasst, ein Verfahren zum Betreiben eines solchen Interferometers sowie die Verwendung eines erfindungsgemäßen optischen Elements.

Interferometer sind Vorrichtungen zur Bestimmung von Interferenzen zur Präzisionsmessung von Längen, Brechzahlen, Winkeln sowie zum Einsatz in der Spektroskopie.

Es sind unterschiedliche Bautypen von Interferometern bekannt, welche sich jedoch in ihrer grundlegenden Funktionsweise ähneln. Wenigstens zwei Lichtstrahlen werden mit Hilfe von Strahlteilern, welche durch Spiegel beziehungsweise halbdurchlässige Spiegel gebildet werden, auf getrennte optische Bahnen geführt und wiederum mittels Spiegeln am Ende dieser zusammengeführt. Die zusammengeführten Lichtstrahlen ergeben durch die unterschiedlichen Weglängen auf den getrennten optischen Bahnen Interferenzmuster.. Die Art und Lage der Interferenzmuster geben Aufschluss über die Interferenzen beziehungsweise die die Interferenzen hervorrufenden Faktoren.

Ein Typ eines Interferometers ist das sogenannte Fabry-Pérot-Interferometer, welches wenigstens zwei zueinander beabstandet angeordnete zumeist planparallele Spiegeln mit hoher Reflektivität aufweist. Die zueinander planparallel angeordnete Spiegel bilden einen optischen Resonator. Hierbei kann das Interferometer einen festen Spiegelabstand zwischen den beiden planparallelen Spiegeln aufweisen oder der Abstand zwischen den beiden Spiegeln kann veränderbar sein.

Das von einem Fabry-Pérot-Interferometer transmittierte Spektrum zeigt schmale Transmissionsmaxima für bestimmte Wellenlängen, welche die Resonanzbedingungen des optischen Resonators erfüllen. Diejenigen Spektralbereiche, welche die Resonanzbedingungen des optischen Resonators nicht erfüllen, werden durch destruktive Interferenzen im Transmissionsspektrum nahezu vollständig ausgelöscht. Hierdurch ist es mit einem Fabry-Pérot-Interferometer möglich, ein Transmissionsspektrum mit spezifischen, schmalbandigen Transmissionsmaxima zu erhalten.

Der Abstand der einzelnen Transmissionsmaxima des Resonators zueinander wird als freier Spektralbereich des Interferometers bezeichnet. Dabei ist der Frequenzabstand zwischen den Transmissionsmaxima vom Abstand der beiden planparallelen Spiegel zueinander sowie von der Brechzahl des zwischen den Spiegeln befindlichen optischen Mediums abhängig und gehorcht der allgemeinen Formel:

$$\Delta f = \frac{c}{2nL}$$

Der durch das Fabry-Pérot-Interferometer gebildete optische Resonator lässt sich über die sogenannte Finesse F charakterisieren, welche das Verhältnis zwischen dem freien Spektralbereich $\Delta\lambda$ und der Halbwertsbreite $\delta\lambda$ der einzelnen Peaks der Transmissionsmaxima definiert:

$$F = \frac{\Delta\lambda}{\delta\lambda}$$

Für hohe Reflektivitäten der planparallelen Spiegel sowie geringe Dämpfung im Resonator nimmt F große Werte an. Eine Veränderung des Abstandes der beiden planparallelen Spiegel führt somit zu einer Änderung der Resonanzbedingungen und der Finesse des Interferometers. Aufgrund dieser Eigenschaften finden Fabry-Pérot-Interferometer mit variablem Abstand zwischen den planparallelen Spiegeln beispielsweise Anwendung als durchstimmbares Interferenzfilter in der Spektroskopie, als Modulator für monochromatische Strahlung in Lasern oder als Laser-Resonator.

Eine dielektrische Filteranordnung wird beispielsweise in US 2005/0237134 A1 offenbart. Diese Patentanmeldung betrifft ein dielektrisches Filter, das durch Schichtung von zwei oder mehr dielektrischen Lagen mit unterschiedlichen relativen Dielektrizitätskonstanten mit einer dielektrischen Multischichtstruktur ausgerüstet ist. Wenigstens eine Einspeisungselektrode ist zwischen jeder dielektrischen Schicht oder innerhalb der dielektrischen Multischichtstruktur ausgebildet. Ein Abschirmungsbereich, welcher die äußere Oberfläche der dielektrischen Multischichtstruktur abdeckt, ist aus einem leitfähigen Material gebildet und so angeordnet, dass er sich lückenlos der äußeren Oberfläche anpasst.

Schaltbare optische Strukturen sind für vielfältige Anwendungen interessant. Ein Weg zur Beeinflussung der optischen Eigenschaften einer Struktur nutzt die piezoelektrischen Eigenschaften bestimmter Materialien aus. In dieser Hinsicht beschreibt WO 2006/127285 A1 beispielsweise geschichtete Filme, die eine Kombination von piezoelektrischen Schichten, welche ihre Abmessungen bei Anlegen einer Spannung ändern, und nicht-piezoelektrischen Schichten aufweisen. Die geschichtete Struktur kann einen weiten Bereich elektrisch schaltbarer optischer Filme ausbilden. Diese Filme können in Anzeigen, Polarisationsfiltern, optischen Kompensatoren, ästhetischen Filmen und "heißen" und "kalten" Spiegeln, welche nur bestimmte Wellenlängen reflektieren, eingesetzt werden. Es werden auch monochromatische und Mehrfarbanzeigen offenbart, in welchen diese Filme Verwendung finden.

Stimmbare Fabry-Pérot-Interferometer, welche weniger empfindlich gegenüber dem Einfallswinkel sind, werden in US 2005/0068541 A1 offenbart. Hierbei wird der Resonanzraum (Luftspalt) durch ein partitioniertes Volumen ersetzt, welches einen Brechungsindex von mehr als eins aufweist. Das partitionierte Volumen beinhaltet ein Paar von partitionierten dielektrischen Schichten, die auf den Reflektoren auf den jeweiligen Seiten des Luftspalts angeordnet sind. Jede der dielektrischen Schichten weist eine optische Dicke auf, die weniger als ein Viertel der kürzesten Wellenlänge des Abstimmbereichs des Filters ausmacht. Das erhaltene dreischichtige partitionierte Volumen hat eine effektive optische Dicke, die im Wesentlichen gleich dem integralen Vielfachen (m) von der Hälfte der transmittierten Wellenlänge innerhalb des Abstimmbereichs des Filters ist.

In Fabry-Pérot-Interferometern mit verstellbarem Abstand zwischen den planparallelen Spiegeln wird eine Abstandsänderung häufig mittels Piezokeramiken, auf welchen die Spiegel montiert sind, bewerkstelligt. Piezokeramiken sind jedoch hinsichtlich der mit ihnen zu bewirkenden Abstandsänderung beschränkt, so dass die Abstandseinstellung und damit das Stimmen des durch ein entsprechendes Fabry-Pérot-Interferometer gebildeten Resonators lediglich begrenzt möglich ist.

Gänzlich andere Wege zur Kontrolle der Bewegung einer adaptiven Struktur werden in US 6,188,160 aufgezeigt. Dieses Patent offenbart ein intelligentes Materialkontrollsystem und ein entsprechendes Verfahren zur adaptiven Kontrolle der Bewegung einer adaptiven Struktur. Die adaptive Struktur umfasst eine intelligente Materialschicht, welche in einer dimorphen Konfiguration an eine leitfähige Oberfläche gebunden ist. Ein Ladungsprojektor, wie beispielsweise eine Elektronenkanone, wird zur Projektion von Ladungen auf die intelligente Materialschicht der adaptiven Struktur genutzt. Eine Spannung/Ladungsquelle regelt adaptive das Potential des leitfähigen Substrats. Abhängig von der Lage der aufgebrachten Ladung und dem adaptiv geregelten Potential des leitfähigen Substrats wird die Abtragung/Kurvatur präzise kontrolliert. In einer alternativen Ausführungsform sind zwei intelligente Materialschichten miteinander verbunden, um eine adaptive Struktur auszubilden, welche unabhängig in x- und y-Richtung kontrolliert werden kann. Es kann auch ein Array von Ladungsprojektoren und/oder leitfähigen Substratabschnitten genutzt werden, um Variationen und eine breite Kontrolle der adaptiven Strukturen zu ermöglichen.

Nachteilig an den aus dem Stand der Technik bekannten Lösungen ist insbesondere ihr vergleichsweise komplizierter Aufbau sowie ein zu geringer Einstellbereich.

Der Erfindung liegt daher die Aufgabe zugrunde, den Aufbau von Interferometeranordnungen zu vereinfachen und gleichzeitig den Einstellbereich der reflektierenden Spiegel zu vergrößern.

Die Aufgabe wird erfindungsgemäß mit einem optischen Element für ein Interferometer dadurch gelöst, dass das optische Element wenigstens ein dielektrisches Elastomer sowie zwei an gegenüberliegenden Seiten des dielektrischen Elastomers angeordnete, zumindest teilweise transparente Elektroden umfasst und wobei der Abstand zwischen den beiden Elektroden durch Anlegen einer elektrischen Spannung an die Elektroden veränderbar ist.

Überraschenderweise hat sich gezeigt, dass dielektrische Elastomere für die vorliegende optische Anwendung geeignet sind. Insbesondere können im Vergleich zu piezoelektrischen Aktoren größere Auslenkungsbereiche und, bedingt durch die Formbarkeit des Elastomers, mehr Gestaltungsmöglichkeiten in der Konstruktion des optischen Elements erreicht werden.

Das erfindungsgemäße optische Element wird bevorzugt in einem Interferometer eingesetzt und kann dort mit anderen Komponenten zusammenwirken. Insbesondere fungiert es selbst als Fabry-Perot-Interferometer zur Vielfachinterferenz.

Die beiden Elektroden des optischen Elements sind vorzugsweise planparallel zueinander angeordnet. Dabei füllt das dielektrische Elastomer den Raum zwischen den beiden planparallel zueinander angeordneten Elektroden aus.

"Zumindest teilweise transparente" Elektroden weisen vorteilhafterweise eine Transparenz, in Draufsicht und für die im optischen Element eingesetzte Schichtdicke bestimmt, für das im optischen Element eingesetzte Licht von ≥10% bis ≤100% und vorzugsweise von ≥30% bis ≤80% auf. Mit eingeschlossen in diesen Begriff ist auch der Fall, dass die Elektroden transparente und nicht transparente Bereiche aufweisen und so eine durchschnittliche Transparenz angegeben werden kann.

Die Elektroden weisen weiterhin eine Reflektivität für das im optischen Element eingesetzte Licht auf. Die Reflektivität kann beispielsweise durch direkte Reflektion oder durch Totalreflektion an der Grenzfläche zweier optisch unterschiedlich dichter Medien erreicht werden.

Bei Anlegen einer Spannung an das dielektrische Elastomer verändert dieses seine Dicke. Sind nun die beiden planparallelen Elektroden in geeigneter Weise mit dem Elastomer verbunden, beispielsweise verklebt, führt die durch die elektrische Spannung induzierte Dickenänderung des Elastomers zu einer Abstandsänderung zwischen den beiden Elektroden. Hierdurch wird die Resonanzbedingung des durch die beiden reflektierenden dielektrischen Elektroden gebildeten (Fabry-Pérot-) Interferometers verändert, wodurch eine Durchstimmbarkeit erreicht wird.

Eine Klasse von Aktoren sind elektroaktive Polymere, wie sie unter anderem in WO 2001/06575 A1 erwähnt werden. Diese Patentanmeldung offenbart einen Energieumwandler, seine Verwendung sowie seine Herstellung. Der Energieumwandler wandelt mechanische Energie in elektrische Energie um. Einige der gezeigten Energieumwandler weisen vorgespannte Polymere auf. Die Vorspannung verbessert die Umwandlung zwischen elektrischer und mechanischer Energie. Darüber hinaus wird eine Vorrichtung offenbart, welche ein elektroaktives Polymer zur Umwandlung von elektrischer Energie in mechanische Energie umfasst. Des Weiteren werden Elektroden offenbart, welche an die Form des Polymers in dem Energieumwandler angepasst sind. Auch werden Verfahren zur Herstellung einer elektromechanischen Vorrichtung offenbart, welche ein oder mehrere elektroaktive Polymere umfasst.

Als Beispiel für den Einsatz dielektrischer Elastomere auf dem Gebiet der Optik sei WO 2009/104122 A1 genannt, welche eine Vorrichtung zur Erzeugung und Projektion von dynamischen Brennflächen zum Gegenstand hat, welche eine Lichtquelle und eine Einrichtung zur dynamischen Refraktion des eingestrahlten Lichts aufweist. Die Installation umfasst eine Effektoberfläche aus einem deformierbaren Material und ist mit Mitteln zur vorbestimmbaren Deformation ausgerüstet. Gemäß einer Ausführungsform kann die Effektoberfläche durch einen dielektrischen Elastomer-Aktor gebildet werden.

Ausführungsformen der Erfindung werden nachfolgend geschildert, wobei die einzelnen Ausführungsformen in beliebiger Weise miteinander kombiniert werden können.

In einer Ausführungsform des erfindungsgemäßen optischen Elements ist das Elastomer ausgewählt aus der Gruppe umfassend Polyurethan-Elastomere, Silikon-Elastomere und/oder Acrylat-Elastomere. Bevorzugt sind hierbei Polyurethan-Elastomere. Diese können durch Umsetzung eines Polyisocyanats A) und/oder eines Polyisocyanat-Prepolymers B) mit mindestens einer mindestens difunktionellen, gegenüber Isocyanatgruppen reaktiven Verbindung C) in Anwesenheit eines in der Polyurethanchemie üblichen Katalysators D) hergestellt werden.

A1s Polyisocyanat A) eignen sich beispielsweise 1,4-Butylendiisocyanat, 1,6-Hexamethylendiisocyanat (HDI), Isophorondiisocyanat (IPDI), 2,2,4 **und/ oder** 2,4,4-Trimethylhexamethylendiisocyanat, die isomeren Bis-(4,4'-isocyanatocyclohexyl)methane oder deren Mischungen beliebigen Isomerengehalts, 1,4-Cyclohexylendiisocyanat, 4-Isocyanatomethyl-1,8-octandiisocyanat (Nonantriisocyanat) , 1 , 4-Phenylendiisocyanat, 2,4- und/oder 2,6-Toluylendiisocyanat, 1,5-Naphthylendiisocyanat, 2,2'- und/oder 2,4'- und/oder 4,4'-Diphenylmethandiisocyanat, 1,3- und/oder 1,4-Bis-(2-isocyanato-prop-2-yl)-benzol (TMXDI), 1,3-Bis(isocyanatomethyl)benzol (XDI), Alkyl-2,6-diisocyanatohexanoate (Lysindiisocyanate) mit Alkylgruppen mit 1 bis 8 Kohlenstoffatomen sowie Mischungen davon. Weiterhin sind Uretdion-, Isocyanurat-, Biuret-, Iminooxadiazindion- oder Oxadiazintrionstruktur enthaltende Verbindungen basierend auf den genannten Diisocyanaten geeignete Bausteine der Komponente A).

Vorzugsweise kann die Komponente A) ein Polyisocyanat oder ein Polyisocyanatgemisch mit einer mittleren NCO-Funktionalität von 2 bis 4 mit ausschließlich aliphatisch oder cycloaliphatisch gebundenen Isocyanatgruppen sein. Bevorzugt handelt es sich um Polyisocyanate oder Polyisocyanatgemische der vorstehend genannten Art mit Uretdion-, Isocyanurat-, Biuret-, Iminooxadiazindion- oder Oxadiazintrionstruktur sowie Mischungen daraus und einer mittleren NCO-Funktionalität der Mischung von 2 bis 4, bevorzugt von 2 bis 2,6 und besonders bevorzugt von 2 bis 2,4.

Die als Komponente B) einsetzbaren Polyisocyanat-Prepolymere können durch Umsetzung von einem oder mehreren Diisocyanaten mit einem oder mehreren hydroxyfunktionellen, insbesondere polymeren, Polyolen gegebenenfalls unter Zusatz von Katalysatoren sowie Hilfs- und Zusatzstoffen erhalten werden. Des Weiteren können zusätzlich Komponenten zur Kettenverlängerung, wie beispielsweise mit primären und/oder sekundären Aminogruppen ($NH_2$- und/oder NH-funktionelle Komponenten) für die Bildung des Polyisocyanat-Prepolymers eingesetzt werden.

Das Polyisocyanat-Prepolymer als Komponente B) kann bevorzugt aus der Umsetzung von polymeren Polyolen und aliphatischen Diisocyanaten erhältlich sein. Hydroxyfunktionelle, polymere Polyole für die Umsetzung zum Polyisocyanat-Prepolymer B) können beispielsweise Polyesterpolyole, Polyacrylatpolyole, Polyurethanpolyole, Polycarbonatpolyole, Polyetherpolyole, Polyesterpolyacrylatpolyole, Polyurethanpolyacrylatpolyole, Polyurethanpolyesterpolyole, Polyurethanpolyetherpolyole, Polyurethanpolycarbonatpolyole und/oder Polyesterpolycarbonatpolyole sein. Diese können zur Herstellung des Polyisocyanat-Prepolymers einzeln oder in beliebigen Mischungen untereinander eingesetzt werden.

Geeignete Polyesterpolyole zur Herstellung der Polyisocyanat-Prepolymere B) können Polykondensate aus Di- sowie gegebenenfalls Tri- und Tetraolen und Di- sowie gegebenenfalls Tri- und Tetracarbonsäuren oder Hydroxycarbonsäuren oder Lactonen sein. Anstelle der freien Polycarbonsäuren können auch die entsprechenden Polycarbonsäureanhydride oder entsprechende Polycarbonsäureester von niederen Alkoholen zur Herstellung der Polyester verwendet werden.

Beispiele für geeignete Diole sind dabei Ethylenglykol, Butylenglykol, Diethylenglykol, Triethylenglykol, Polyalkylenglykole wie Polyethylenglykol, weiterhin 1,2-Propandiol, 1,3-Propandiol, Butandiol(1,3), Butandiol(1,4), Hexandiol(1,6) und Isomere, Neopentylglykol oder Hydroxypivalinsäureneopentylglykolester oder Mischungen davon, wobei Hexandiol(1,6) und Isomere, Butandiol(1,4), Neopentylglykol und Hydroxypivalinsäureneopentylglykolester bevorzugt sind. Daneben können auch Polyole wie Trimethylolpropan, Glycerin, Erythrit, Pentaerythrit, Trimethylolbenzol oder Trishydroxyethylisocyanurat oder Mischungen davon eingesetzt werden.

A1s Dicarbonsäuren können dabei Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlorphthalsäure, Maleinsäure, Fumarsäure, Itaconsäure, Malonsäure, Korksäure, 2-Methylbernsteinsäure, 3,3-Diethylglutarsäure und/oder 2,2-Dimethylbernsteinsäure eingesetzt werden. Als Säurequelle können auch die entsprechenden Anhydride verwendet werden.

Sofern die mittlere Funktionalität des zu veresternden Polyols ≥ 2 ist, können zusätzlich auch Monocarbonsäuren, wie Benzoesäure und Hexancarbonsäure mit verwendet werden.

Bevorzugte Säuren sind aliphatische oder aromatische Säuren der vorstehend genannten Art. Besonders bevorzugt sind dabei Adipinsäure, Isophthalsäure und Phthalsäure.

Hydroxycarbonsäuren, die als Reaktionsteilnehmer bei der Herstellung eines Polyesterpolyols mit endständigen Hydroxylgruppen mitverwendet werden können, sind beispielsweise Hydroxycapronsäure, Hydroxybuttersäure, Hydroxydecansäure oder Hydroxystearinsäure oder Mischungen davon. Geeignete Lactone sind Caprolacton, Butyrolacton oder Homologe oder Mischungen davon. Bevorzugt ist dabei Caprolacton.

Ebenfalls können zur Herstellung der Polyisocyanat-Prepolymere B) Hydroxylgruppen aufweisende Polycarbonate, beispielsweise Polycarbonatpolyole, bevorzugt Polycarbonatdiole, eingesetzt werden. Beispielsweise können diese ein zahlenmittleres Molekulargewicht $M_n$ von 400 g/mol bis 8000 g/mol, bevorzugt von 600 g/mol bis 3000 g/mol, haben. Diese können durch Reaktion von Kohlensäurederivaten, wie Diphenylcarbonat, Dimethylcarbonat oder Phosgen, mit Polyolen, bevorzugt Diolen, erhalten werden.

Beispiele hierfür geeigneter Diole sind Ethylenglykol, 1,2- und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenol A oder lactonmodifizierte Diole der vorstehend genannten Art oder Mischungen davon.

Bevorzugt enthält dann die Diolkomponente dabei von 40 Gewichtsprozent bis 100 Gewichtsprozent Hexandiol, vorzugsweise 1,6-Hexandiol und/oder Hexandiolderivate. Solche Hexandiolderivate basieren auf Hexandiol und können neben endständigen OH-Gruppen Ester- oder Ethergruppen aufweisen. Derartige Derivate sind beispielsweise durch Reaktion von Hexandiol mit überschüssigem Caprolacton oder durch Veretherung von Hexandiol mit sich selbst zum Di- oder Trihexylenglykol erhältlich. Die Menge dieser und anderer Komponenten werden derart gewählt, dass die Summe 100 Gewichtsprozent nicht überschreitet, insbesondere 100 Gewichtsprozent ergibt.

Hydroxylgruppen aufweisende Polycarbonate, insbesondere Polycarbonatpolyole, sind bevorzugt linear gebaut.

Ebenfalls können zur Herstellung der Polyisocyanat-Prepolymere B) Polyetherpolyole eingesetzt werden. Beispielsweise eignen sich Polytetramethylenglykolpolyether, wie sie durch Polymerisation von Tetrahydrofuran mittels kationischer Ringöffnung erhältlich sind. Ebenfalls geeignete Polyetherpolyole können die Additionsprodukte von Styroloxid, Ethylenoxid, Propylenoxid, Butylenoxid und/oder Epichlorhydrin an di- oder polyfunktionelle Startermoleküle sein. Als geeignete Startermoleküle können beispielsweise Wasser, Butyldiglykol, Glycerin, Diethylenglykol, Trimethyolpropan, Propylenglykol, Sorbit, Ethylendiamin, Triethanolamin, oder 1,4-Butandiol oder Mischungen davon eingesetzt werden.

Bevorzugte Komponenten zur Herstellung der Polyisocyanat-Prepolymere B) sind Polypropylenglykol, Polytetramethylenglykolpolyether und Polycarbonatpolyole beziehungsweise deren Mischungen, wobei Polypropylenglykol besonders bevorzugt ist.

Dabei können polymere Polyole mit einem zahlenmittleren Molekulargewicht $M_n$ von 400 g/mol bis 8000 g/mol, bevorzugt von 400 g/mol bis 6000 g/mol und besonders bevorzugt von 600 g/mol bis 3000 g/mol eingesetzt werden. Diese weisen bevorzugt eine OH-Funktionalität von 1,5 bis 6, besonders bevorzugt von 1,8 bis 3, ganz besonders bevorzugt von 1,9 bis 2,1 auf.

Neben den genannten polymeren Polyolen können auch kurzkettige Polyole bei der Herstellung der Polyisocyanat-Prepolymere B) eingesetzt werden. Beispielsweise kann Ethylenglykol, Diethylenglykol, Triethylenglykol, 1,2-Propandiol, 1,3-Propandiol, 1,4-Butandiol, 1,3-Butylenglykol, Cyclohexandiol, 1,4-Cyclohexandimethanol, 1,6-Hexandiol, Neopentylglykol, Hydrochinondihydroxyethylether, Bisphenol A (2,2-Bis(4-hydroxyphenyl)propan), hydriertes Bisphenol A (2,2-Bis(4-hydroxycyclohexyl)propan), Trimethylolpropan, Trimethylolethan, Glycerin oder Pentaerythrit oder eine Mischung davon eingesetzt werden.

Geeignet sind auch Esterdiole des genannten Molekulargewichtsbereichs wie α-Hydroxybutyl-ε-hydroxy-capronsäureester, ω-Hydroxyhexyl-y-hydroxybuttersäureester, Adipinsäure-(β-hydroxyethyl)ester oder Terephthalsäurebis(β-hydroxyethyl)ester.

Ferner können zur Herstellung der Polyisocyanat-Prepolymere B) auch monofunktionelle isocyanatreaktive hydroxylgruppenhaltige Verbindungen eingesetzt werden. Beispiele solcher monofunktionellen Verbindungen sind Ethanol, n-Butanol, Ethylenglykolmonobutylether, Diethylenglykolmonomethylether, Diethylenglykolmonobutylether, Propylenglykolmonomethylether, Dipropylenglykol-monomethylether, Tripropylenglykolmonomethylether, Dipropylenglykolmonopropylether, Propylenglykolmonobutylether, Dipropylenglykolmonobutylether, Tripropylenglykolmonobutylether, 2-Ethylhexanol, 1-Octanol, 1-Dodecanol oder 1-Hexadecanol oder Mischungen davon.

Zur Herstellung der Polyisocyanat-Prepolymere B) können vorzugsweise Diisocyanate mit den Polyolen bei einem Verhältnis der Isocyanatgruppen zu Hydroxylgruppen (NCO/OH-Verhältnis) von 2:1 bis 20:1, beispielsweise von 8:1, umgesetzt werden. Dabei können Urethan- und/oder Allophanatstrukturen gebildet werden. Ein Anteil an nicht umgesetzten Polyisocyanaten kann anschließend abgetrennt werden. Hierfür kann beispielsweise eine Dünnschichtdestillation verwendet werden, wobei restmonomerenarme Produkte mit Restmonomergehalten von beispielsweise ≤ 1 Gewichtsprozent, bevorzugt ≤ 0,5 Gewichtsprozent, besonders bevorzugt ≤ 0,1 Gewichtsprozent, erhalten werden. Die Reaktionstemperatur kann dabei von 20 °C bis 120 °C, bevorzugt von 60 °C bis 100 °C, betragen. Gegebenenfalls können während der Herstellung Stabilisatoren wie Benzoylchlorid, Isophthaloylchlorid, Dibutylphosphat, 3-Chlorpropionsäure oder Methyltosylat zugesetzt werden.

Weiterhin können NH$_2$- und/oder NH-funktionelle Komponenten zusätzlich zur Kettenverlängerung bei der Herstellung der Polyisocyanat-Prepolymere B) eingesetzt werden.

Geeignete Komponenten zur Kettenverlängerung sind organische Di- oder Polyamine. Beispielsweise können Ethylendiamin, 1,2- Diaminopropan, 1,3-Diaminopropan, 1,4-Diaminobutan, 1,6-Diaminohexan, Isophorondiamin, Isomerengemische von 2,2,4- und 2,4,4-Trimethylhexamethylendiamin, 2-Methylpentamethylendiamin, Diethylentriamin, Diaminodicyclohexylmethan oder Dimethylethylendiamin oder Mischungen davon eingesetzt werden.

Darüber hinaus können auch Verbindungen, die neben einer primären Aminogruppe auch sekundäre Aminogruppen oder neben einer Aminogruppe (primär oder sekundär) auch OH-Gruppen aufweisen, zur Herstellung der Polyisocyanat-Prepolymere B) eingesetzt werden. Beispiele hierfür sind primäre/sekundäre Amine, wie Diethanolamin, 3-Amino-1-methylaminopropan, 3-Amino-1-ethylaminopropan, 3-Amino-1-cyclohexylaminopropan, 3-Amino-1-methylaminobutan, Alkanolamine wie N-Aminoethylethanolamin, Ethanolamin, 3-Aminopropanol, Neopentanolamin. Zur Kettenterminierung werden üblicherweise Amine mit einer gegenüber Isocyanaten reaktiven Gruppe wie Methylamin, Ethylamin, Propylamin, Butylamin, Octylamin, Laurylamin, Stearylamin, Isononyloxypropylamin, Dimethylamin, Diethylamin, Dipropylamin, Dibutylamin, N-Methylaminopropylamin, Diethyl(methyl)aminopropylamin, Morpholin, Piperidin, beziehungsweise geeignete substituierte Derivate davon, Amidamine aus diprimären Aminen und Monocarbonsäuren, Monoketimine von diprimären Aminen, primär/tertiäre Amine, wie N,N-Dimethylaminopropylamin, verwendet.

Die als Komponente B) eingesetzten Polyisocyanat-Prepolymere oder deren Mischungen können bevorzugt eine mittlere NCO-Funktionalität von 1,8 bis 5, besonders bevorzugt 2 bis 3,5 und ganz besonders bevorzugt 2 bis 3 aufweisen.

Die Komponente C) ist eine Verbindung mit mindestens zwei isocyanatreaktiven funktionellen Gruppen. Beispielsweise kann Komponente C) ein Polyamin oder ein Polyol mit mindestens zwei isocyanatreaktiven Hydroxygruppen sein.

Als Komponente C) können hydroxyfunktionelle, insbesondere polymere, Polyole, beispielsweise Polyetherpolyole oder Polyesterpolyole eingesetzt werden. Geeignete Polyole wurden bereits vorstehend im Zusammenhang mit der Herstellung des Prepolymers B) geschildert, so dass zur Vermeidung von Wiederholungen hierauf Bezug genommen wird.

Es ist bevorzugt, dass die Komponente C) ein Polymer mit 2 bis 4 Hydroxygruppen pro Molekül, ganz besonders bevorzugt ein Polypropylenglykol mit 2 bis 3 Hydroxygruppen pro Molekül ist.

Es ist günstig, wenn die polymeren Polyole C) eine besonders enge Molekulargewichtsverteilung, das heißt eine Polydispersität (PD = Mw/Mn) von 1,0 bis 1,5 aufweisen. Bevorzugt weisen beispielsweise Polyetherpolyole eine Polydispersität von 1,0 bis 1,5 und eine OH-Funktionalität von größer 1,9 auf, und besonders bevorzugt größer oder gleich 1,95 auf.

Solche Polyetherpolyole sind in an sich bekannter Weise durch Alkoxylierung von geeigneten Starter-Molekülen, insbesondere unter Verwendung von Doppelmetallcyanid-Katalysatoren (DMC-Katalyse) herstellbar. Diese Methode ist zum Beispiel in der Patentschrift US 5,158,922 und der Offenlegungsschrift EP 0 654 302 A1 beschrieben.

Die Reaktionsmischung für das Polyurethan kann durch Mischen der Komponenten A) und/oder B) und C) erhalten werden. Das Verhältnis von isocyanatreaktiven Hydroxygruppen zu freien Isocyanatgruppen ist dabei vorzugsweise von 1:1,5 bis 1,5:1 besonders bevorzugt von 1:1,02 bis 1:0,95.

Vorzugsweise besitzt zumindest eine der Komponenten A), B) oder C) eine Funktionalität von ≥ 2,0, bevorzugt von ≥ 2,5 bevorzugt von ≥3,0, um in das Polymerelement eine Verzweigung oder eine Vernetzung einzuführen. Der Begriff "Funktionalität" bezieht sich bei Komponente A) und B) auf die mittlere Anzahl von NCO-Gruppen pro Molekül und bei Komponente C) auf die mittlere Anzahl von OH-, NH- oder NH$_2$-Gruppen pro Molekül. Diese Verzweigung beziehungsweise Vernetzung bewirkt bessere mechanische Eigenschaften und bessere elastomere Eigenschaften, insbesondere auch bessere Dehnungseigenschaften, was beim Einsatz der dielektrischen Elastomere in erfindungsgemäßen optischen Elementen vorteilhaft ist, da der Abstand D der reflektierenden Flächen über weitere Bereiche einstellbar ist.

Das erhaltene Polyurethanpolymer kann vorzugsweise eine maximale Spannung von ≥ 0,2 MPa, insbesondere von 0,4 MPa bis 50 MPa, und eine maximale Dehnung von ≥100 %, insbesondere von ≥ 120 %, aufweisen. Darüber hinaus kann das Polyurethan im Dehnungsbereich von 50 % bis 200 % eine Spannung von 0,1 MPa bis 1 MPa, beispielsweise von 0,1 MPa bis 0,8MPa, insbesondere von 0,1 MPa bis 0,3 MPa, aufweisen (Bestimmung nach ASTM D 412). Ferner kann das Polyurethan ein Elastizitätsmodul bei einer Dehnung von 100 % von 0,1 MPa bis 10 MPa, beispielsweise von 1 MPa bis 8 MPa, aufweisen (Bestimmung nach ASTM D 412).

Vorzugsweise ist das erhaltene Polyurethanpolymer ein dielektrisches Elastomer mit einem spezifischen elektrischen Volumenwiderstand gemäß ASTM D 257 von ≥10¹² bis ≤10 ¹⁷ Ohm cm. Es ist weiterhin möglich, dass das Polyurethanpolymer eine Dielektrizitätskonstante gemäß ASTM 150-98 von ≥ 5 bis ≤ 10 und eine dielektrische Durchbruchsfeldstärke gemäß ASTM 149-97a von ≥ 100 V/μm bis ≤200 V/μm aufweist. Grundsätzlich wird eine maximale Dielektrizitätskonstante angestrebt, um die Gebrauchsfähigkeit des Polymers zu optimieren.

Die Reaktionsmischung zur Herstellung des Polyurethans kann neben den Komponenten A), B), C) und D) zusätzlich auch Hilfs- und Zusatzstoffe enthalten. Beispiele für solche Hilfs- und Zusatzstoffe sind Vernetzer, Verdicker, Lösemittel, Thixotropiermittel, Stabilisatoren, Antioxidantien, Lichtschutzmittel, Emulgatoren, Tenside, Klebstoffe, Weichmacher, Hydrophobierungsmittel, Pigmente, Füllstoffe und Verlaufshilfsmittel. Bevorzugte Lösungsmittel sind Methoxypropylacetat und Ethoxypropylacetat. Bevorzugte Verlaufshilfsmittel sind Polyacrylate, insbesondere aminharzmodifizierte Acrylcopolymerisate.

Füllstoffe können beispielsweise die Dielektrizitätskonstante des Polymerelements regulieren. Vorzugsweise umfasst die Reaktionsmischung Füllstoffe zur Erhöhung der Dielektrizitätskonstanten wie Füllstoffe mit einer hohen Dielektrizitätskonstante. Beispiele hierfür sind keramische Füllstoffe, insbesondere Bariumtitanat, Titandioxid und piezoelektrische Keramiken wie Quarz oder Bleizirkoniumtitanat, sowie organische Füllstoffe, insbesondere solche mit einer hohen elektrischen Polarisierbarkeit, beispielsweise Phthalocyanine.

Außerdem ist eine hohe Dielektrizitätskonstante auch durch das Einbringen elektrisch leitfähiger Füllstoffe unterhalb der Perkolationsschwelle erzielbar. Beispiele hierfür sind Ruß, Graphit, einwandige oder mehrwandige Kohlenstoff-Nanoröhrchen, elektrisch leitfähige Polymere wie Polythiophene, Polyaniline oder Polypyrrole, oder Mischungen davon. In diesem Zusammenhang sind insbesondere solche Rußtypen von Interesse, die eine Oberflächenpassivierung aufweisen und deshalb bei niedrigen Konzentrationen unterhalb der Perkolationsschwelle zwar die Dielektrizitätskonstante erhöhen und trotzdem nicht zu einer Erhöhung der Leitfähigkeit des Polymers führen.

Hinsichtlich der Füllstoffe versteht es sich, dass darauf zu achten ist, dass sie nicht die optischen Eigenschaften des Elastomers bis hin zur Unbrauchbarkeit beeinträchtigen.

Angemerkt sei, dass die Begriffe "ein" und "eine" im Zusammenhang mit der vorliegenden Erfindung und insbesondere mit der Komponenten A), B) und C) nicht als Zahlwörter, sondern als unbestimmter Artikel verwendet werden, sofern der Kontext nicht eindeutig eine andere Aussage ergibt.

Es ist möglich, dass sich im erfindungsgemäßen optischen Elements der Brechungsindex $n_D$ bei 589 nm des dielektrischen Elastomers beim Anlegen einer elektrischen Spannung ändert. Das Ändern des Brechungsindexes kann zusätzlich zu einer Abstandsänderung innerhalb des Resonators die Abstimmbarkeit eines Interferometers günstig beeinflussen. Dies erlaubt eine Stimmung des Interferometers über weite Bereiche.

In einer weiteren Ausführungsform des erfindungsgemäßen optischen Elements ist das Material der Elektroden ausgewählt aus der Gruppe umfassend Metalle, Metalllegierungen, leitfähige Oligo- oder Polymere, leitfähige Oxide und mit leitfähigen Füllstoffen gefüllten Polymeren oder Kombinationen daraus.

Zur Maximierung der Reflektivität der Elektroden und damit beispielsweise der Finesse eines mit dem erfindungsgemäßen optischen Element ausgerüsteten Interferometers werden als Elektrodernnaterialien bevorzugt Metalle der Gruppe Ag, Au und A1 eingesetzt. Aber auch Mischoxide, wie zum Beispiel Indium-Zinn-Oxide (ITO), können eingesetzt werden. Dabei kann durch die Stöchiometrie des ITO die gewünschte Reflektivität eingestellt werden. Bei Verwendung solcher Mischoxide lassen sich die Elektroden in vorteilhafter Weise teildurchlässig gestalten, wodurch die Reflektivität der Elektroden variiert werden kann.

Als leitfähige Oligo- oder Polymere können beispielsweise Polythiophene, Polyaniline oder Polypyrrole eingesetzt werden. Als Füllstoffe für mit leitfähigen Füllstoffen gefüllte Polymere können beispielsweise Metalle, auch z.B. durch Ionen-Implantation, leitfähige Kohlenstoff basierte Materialien, wie Ruß, Kohlenstoff-Nanoröhrchen (carbon nanotubes, CNT) oder leitfähige Oligo- oder Polymere eingesetzt werden. Näheres hierzu findet sich in Rosset, S. et al. "Metal Ion Implantation for the Fabrication of Stretchable Electrodes on Elastomers" Adv. Funct. Mater., 2009, 19, 470-478. Der Füllstoffgehalt der Polymere liegt dabei vorzugsweise oberhalb der Perkolationsschwelle, so dass die leitfähigen Füllstoffe durchgehend elektrisch leitfähige Pfade innerhalb der mit leitfähigen Füllstoffen gefüllten Polymere ausbilden.

In einer weiteren Ausführungsform des erfindungsgemäßen optischen Elements umfasst dieses weiterhin eine an das dielektrische Elastomer angrenzende, von den Elektroden verschiedene reflektierende Schicht. Vorzugsweise ist dieses für den Fall gering reflektierender Elektroden vorgesehen. Solch eine Schicht kann aufgrund der besseren Reflexion die Leistung des optischen Elements erhöhen. Sie kann unter anderem zwischen einer Elektrode und dem dielektrischen Elastomer und/oder in einer Aussparung einer Elektrode angeordnet sein. Beispiele für geeignete reflektierende Schichten sind aufgedampfte Silber- oder Goldschichten.

In einer weiteren Ausführungsform des erfindungsgemäßen optischen Elements ist wenigstens eine der an gegenüberliegenden Seiten des dielektrischen Elastomeren angeordneten, zumindest teilweise transparenten Elektroden segmentiert ausgebildet. Insbesondere sind hierunter scheiben- oder ringförmig segmentierte Elektroden zu verstehen. In den Zwischenräumen der Elektrodensegmente kann sich das Elastomer ungehindert verformen, ohne dass die Elektroden in ihrer Form beeinträchtigt werden.

Die vorliegende Erfindung betrifft ebenfalls ein Interferometer, umfassend ein optisches Element gemäß der vorliegenden Erfindung. Weitere Elemente des Interferometers können zum Beispiel Mess- und Steuereinrichtungen und dergleichen oder weitere optische Elemente zur Strahlführung oder -formung sein. In einer Ausführungsform des erfindungsgemäßen Interferometers ist das Interferometer ein Fabry-Pérot-Interferometer. Details zum Fabry-Pérot-Interferometer wurden bereits eingangs erläutert.

Ein weiterer Gegenstand der vorliegenden Erfindung ist ein Verfahren zum Betreiben eines erfindungsgemäßen Interferometers, umfassend die Schritte:

Bereitstellen eines erfindungsgemäßen Interferometers;

Einstrahlen von Licht durch das optische Element des Interferometers; und

Anlegen einer elektrischen Spannung an das dielektrische Elastomer mittels der Elektroden, wobei die elektrische Spannung ausreichend ist, um eine Veränderung der Schichtdicke und/oder des Brechungsindexes des dielektrischen Elastomers zu bewirken.

Beim Einstrahlen von Licht durch das optische Element wird selbstverständlich so vorgegangen, dass das Licht in den Resonanzraum eintritt, innerhalb des Resonanzraums reflektiert wird und aus dem Resonanzraum wieder austritt. Die Resonanzbedingungen können durch das Anlegen der elektrischen Spannung auf zweierlei Weise verändert werden: indem die Schichtdicke des Elastomers sich ändert und somit die Wegstrecke des reflektierten Lichtes sowie unabhängig davon auch dadurch, dass sich der Brechungsindex des Elastomers ändert. Vorzugsweise ist der hierbei betrachtete Brechungsindex $n_D$ derjenige des Elastomers bei einer Wellenlänge von 589 nm.

In einer Ausführungsform des erfindungsgemäßen Verfahrens wird das Interferometer als durchstimmbares Interferenzfilter betrieben. Auf diese Weise kann die spektrale Lage des Transmissionsfensters verschoben werden.

In einer weiteren Ausführungsform des erfindungsgemäßen Verfahrens umfasst das eingestrahlte Licht zwei Intensitätsmaxima mit einer ersten Wellenlänge $\lambda_1$ und einer zweiten Wellenlänge $\lambda_2$, wobei beim Anlegen einer ersten elektrischen Spannung an das dielektrische Elastomer die Transmission des optischen Elements für Licht der Wellenlänge $\lambda_1$ größer ist als für Licht der Wellenlänge $\lambda_2$ ist und wobei beim Anlegen einer zweiten, von der ersten verschiedenen elektrischen Spannung an das dielektrische Elastomer die Transmission des optischen Elements für Licht der Wellenlänge $\lambda_2$ größer ist als für Licht der Wellenlänge $\lambda_1$.

Auf diese Weise kann ein schaltbares Interferometer betrieben werden. In einem Zustand (keine oder eine erste Spannung angelegt) kann vorrangig oder ausschließlich Licht einer ersten Wellenlänge das Filter passieren. Die erste elektrische Spannung kann auch den Wert Null annehmen. Durch Anlegen der zweiten Spannung wird das Interferometer in den zweiten Zustand geschaltet und das Licht der zweiten Wellenlänge kann vorrangig oder ausschließlich das Filter passieren. Insbesondere eignet sich diese Betriebsweise für benachbarte, schmalbandige Eingangssignale.

In einer weiteren Ausführungsform des erfindungsgemäßen Verfahrens ist die an das dielektrische Elastomer angelegte elektrische Spannung während des Betriebes des Interferometers zeitlich veränderlich. Auf diese Weise kann ein optisches Signal hinsichtlich seiner Intensität moduliert werden. Insbesondere kann die angelegte Spannung in einen Regelkreis eingebunden sein.

Ein weiterer Gegenstand der vorliegenden Erfindung ist die Verwendung eines erfindungsgemäßen optischen Elementes oder eines erfindungsgemäßen Interferometers als durchstimmbares Interferenzfilter, optischer Schalter und/oder Intensitätsmodulator. In einer bevorzugten Verwendung erfolgt die Verwendung als Intensitätsmodulator in einer Laseranordnung.

Die vorliegende Erfindung wird anhand der nachfolgenden Zeichnungen weiter erläutert, ohne jedoch darauf beschränkt zu sein.

FIG. 1    zeigt den schematischen Aufbau eines optischen Elements umfassend ein dielektrisches Elastomer sowie zwei an gegenüberliegenden Seiten des dielektrischen Elastomers angeordnete Elektroden

FIG. 2    zeigt den schematischen Aufbau eines optischen Elements in anderer Darstellung

FIG. 3    zeigt den schematischen Aufbau eines weiteren optischen Elements

FIG. 4    zeigt den schematischen Aufbau eines weiteren optischen Elements in anderer Darstellung

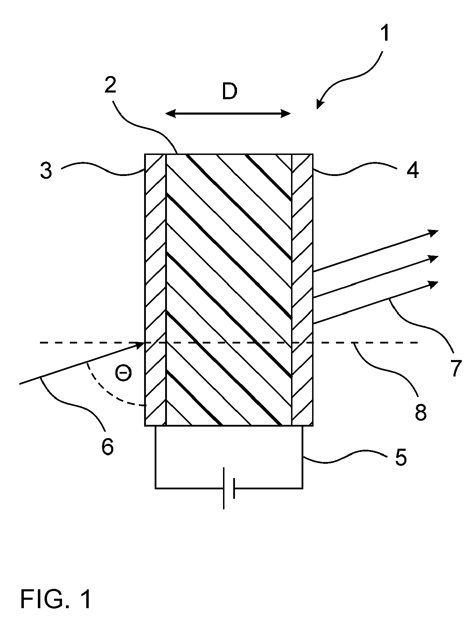

In FIG. 1 ist der schematische Aufbau eines optischen Elementes 1 gezeigt. Zwei planparallel zueinander ausgerichtete Elektroden 3 und 4 sind an gegenüberliegenden Seiten eines dielektrischen Elastomers 2 angeordnet. Die Elektroden 3 und 4 sind mittels elektrischer Verbindungsmittel an einen Stromkreis 5 anschließbar. Der Abstand D zwischen den beiden Elektroden 3 und 4 ergibt sich im Ruhezustand, also ohne eine an die Elektroden E1 und E2 über den Stromkreis 3 angelegte Spannung durch die Dicke des dielektrischen Elastomers 2.

Licht 6 der Wellenlänge λ, aus einer Lichtquelle, wie zum Beispiel einem Laser, trifft nun in einem Winkel 90° - Θ zur optischen Achse 8 auf die Elektrode 3 und wird von dieser bedingt durch ihre refraktiven Eigenschaften abgelenkt, so dass es mit einem entsprechend geänderten Winkel in das dielektrische Elastomer 2 eintritt. In diesem wird es nun an den Innenseiten der Elektroden 3 und 4 teilweise reflektiert, wobei es in Abhängigkeit von Einstrahlwinkel, Schichtdicke D, Brechungsindex und Wellenlänge zu destruktiver oder konstruktiver Interferenz (Resonanz) kommt.

Die Lage der Interferenzen im Spektrum ist, wie vorstehend erwähnt, von dem Abstand D der Elektroden 3 und 4 zueinander sowie der Brechzahl n des dielektrischen Elastomers 2 abhängig. Das Licht tritt dann als Lichtstrahl 7 mit einem vom einstrahlenden Licht 6 unterschiedlichen Emissionsmaximum an der Elektrode 4 aus. Durch Anlegen einer Spannung mittels des Stromkreises 5 an die Elektroden 3 und 4 verändert das dielektrische Elastomer 2 seine Ausdehnung, wodurch sich der Abstand D zwischen den Elektroden 3 und 4 ändert. Darüber hinaus ändert das dielektrische Elastomer 2 durch die angelegte Spannung seine Brechzahl n. Beide Effekte führen zu einer Veränderung der Resonanzbedingungen im optischen Element 1, so dass durch Anlegen unterschiedlicher Spannungen die Resonanzeigenschaften und hierdurch die Emissionsmaxima des emittierten Lichtes verändert werden können.

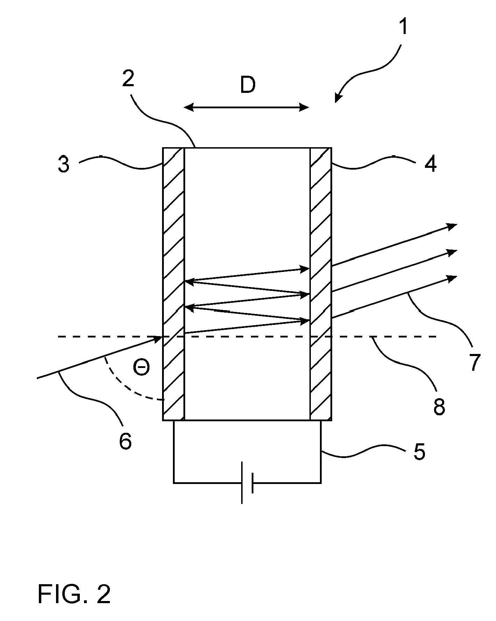

FIG. 2 zeigt dasselbe optische Element wie in FIG. 1, wobei zur besseren Übersicht die Schraffur für das Material der dielektrischen Elastomerschicht 2 ausgelassen wurde und dafür schematisch Reflexionen des Lichtstrahls innerhalb der dielektrischen Elastomerschicht 2 aufgezeigt werden.

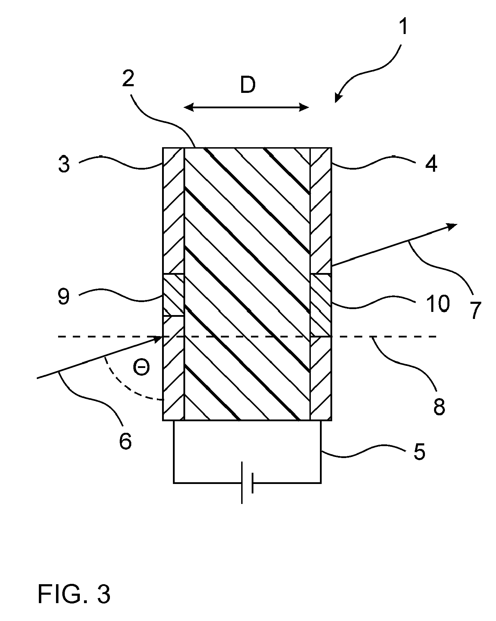

FIG. 3 zeigt ein weiteres optisches Element. Der einzige Unterschied zu dem optischen Element aus FIG. 1 ist, dass reflektierende Schichten 9, 10 an das Elastomer 2 angrenzen. Der Lichtstrahl 6 tritt an der Elektrode 3 durch einen von der Schicht 9 freigehaltenen Bereich hindurch und wird bis zu seinem Austritt durch die Elektrode 4 an den Schichten 9, 10 reflektiert.

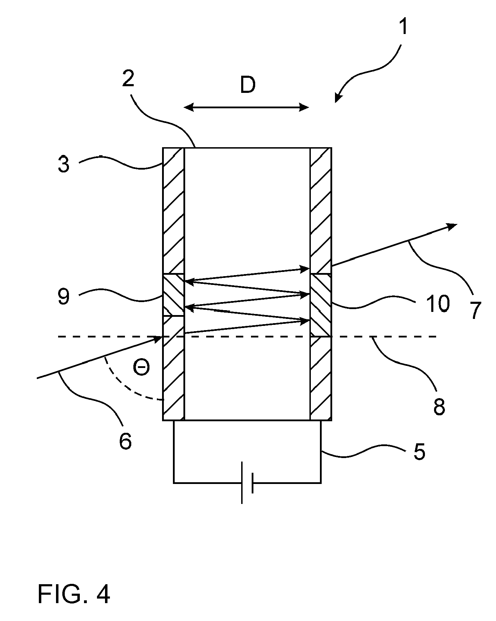

Der schematische Strahlengang ist analog zu FIG. 2 in FIG. 4 gezeigt.

**Patentansprüche**

1. Optisches Element (1) für ein Interferometer,
   **dadurch gekennzeichnet, dass**
   das optische Element (1) wenigstens ein dielektrisches Elastomer (2) sowie zwei an gegenüberliegenden Seiten des dielektrischen Elastomers (2) angeordnete, zumindest teilweise transparente Elektroden (3, 4) umfasst und wobei der Abstand zwischen den beiden Elektroden (3, 4) durch Anlegen einer elektrischen Spannung an die Elektroden (3, 4) veränderbar ist.

2. Optisches Element nach Anspruch 1,
   **dadurch gekennzeichnet, dass**

das Elastomer (2) ausgewählt ist aus der Gruppe umfassend Polyurethan-Elastomere, Silikon-Elastomere und/oder Acrylat-Elastomere.

3. Optisches Element nach Anspruch 1 oder 2,
   **dadurch gekennzeichnet, dass**
   das Material der Elektroden (3, 4) ausgewählt ist aus der Gruppe umfassend Metalle, Metalllegierungen, leitfähige Oligo- oder Polymere, leitfähige Oxide und mit leitfähigen Füllstoffen gefüllten Polymeren oder Kombinationen daraus.

4. Optisches Element nach einem der Ansprüche 1 bis 3, weiterhin umfassend eine an das dielektrische Elastomer (2) angrenzende, von den Elektroden (3, 4) verschiedene reflektierende Schicht (9, 10).

5. Optisches Element nach Anspruch 4,
   **dadurch gekennzeichnet, dass**
   die reflektierende Schicht (9, 10) zwischen einer Elektrode und dem dielektrischen Elastomer und/oder in einer Aussparung einer Elektrode angeordnet ist.

6. Optisches Element nach einem der Ansprüche 1 bis 5,
   **dadurch gekennzeichnet, dass**
   wenigstens eine der an gegenüberliegenden Seiten des dielektrischen Elastomeren (2) ngeordneten, zumindest teilweise transparenten Elektroden (3, 4) segmentiert ausgebildet ist.

7. Interferometer umfassend ein optisches Element nach einem der Ansprüche 1 bis 6.

8. Interferometer nach Anspruch 7, wobei das Interferometer ein Fabry-Pérot-Interferometer ist.

9. Verfahren zum Betreiben eines Interferometers nach Anspruch 7 oder 8, umfassend die Schritte:

   Bereitstellen eines Interferometers nach Anspruch 7 oder 8;
   Einstrahlen von Licht durch das optische Element (1) des Interferometers; und
   Anlegen einer elektrischen Spannung an das dielektrische Elastomer (2) mittels der Elektroden (3, 4), wobei die elektrische Spannung ausreichend ist, um eine Veränderung der Schichtdicke und/oder des Brechungsindexes des dielektrischen Elastomers (2) zu bewirken.

10. Verfahren nach Anspruch 9, wobei das Interferometer als durchstimmbares Interferenzfilter betrieben wird.

11. Verfahren nach Anspruch 9,
    wobei das eingestrahlte Licht zwei Intensitätsmaxima mit einer ersten Wellenlänge $\lambda_1$ und einer zweiten Wellenlänge $\lambda_2$ umfasst,

wobei beim Anlegen einer ersten elektrischen Spannung an das dielektrische Elastomer (2) die Transmission des optischen Elements (1) für Licht der Wellenlänge $\lambda_1$ größer ist als für Licht der Wellenlänge $\lambda_2$ und

wobei beim Anlegen einer zweiten, von der ersten verschiedenen elektrischen Spannung an das dielektrische Elastomer (2) die Transmission des optischen Elements (1) für Licht der Wellenlänge $\lambda_2$ größer ist als für Licht der Wellenlänge $\lambda_1$.

12. Verfahren nach einem der Ansprüche 9 bis 11, wobei die an das dielektrische Elastomer (2) angelegte elektrische Spannung während des Betriebes des Interferometers zeitlich veränderlich ist.

13. Verwendung eines optischen Elementes nach einem der Ansprüche 1 bis 6 oder eines Interferometers gemäß Anspruch 7 oder 8 als durchstimmbares Interferenzfilter, optischer Schalter und/oder Intensitätsmodulator.

FIG. 1

FIG. 2

FIG. 3

FIG. 4

Europäisches
Patentamt

European
Patent Office

Office européen
des brevets

## EUROPÄISCHER RECHERCHENBERICHT

Nummer der Anmeldung

EP 10 17 1875

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 6 597 461 B1 (VERMA RAVI K [US] ET AL) 22. Juli 2003 (2003-07-22) <br> * Abbildungen 11a,12a * <br> * Spalte 9, Zeile 31 - Zeile 32 * <br> * Spalte 11, Absatz 54 - Spalte 12, Absatz 16 * <br> * Spalte 13, Zeile 1 - Zeile 7 * <br> ----- | 1-5,7-13 | INV. <br> G01B9/02 <br> G02F1/01 |
| X | DE 10 2004 012094 A1 (SIEMENS AG [DE]) 29. September 2005 (2005-09-29) <br> * Abbildung 1 * <br> * Absatz [0003] * <br> * Absatz [0017] - Absatz [0018] * <br> ----- | 1-3,7-13 | |
| X | US 2010/171393 A1 (PEI QIBING [US] ET AL) 8. Juli 2010 (2010-07-08) <br> * Abbildung 20 * <br> * Absatz [0127] - Absatz [0128] * <br> * Absatz [0018] * <br> ----- | 1-3,6,13 | |
| | | | RECHERCHIERTE SACHGEBIETE (IPC) <br><br> G01B <br> G02F |

Der vorliegende Recherchenbericht wurde für alle Patentansprüche erstellt

| Recherchenort | Abschlußdatum der Recherche | Prüfer |
|---|---|---|
| München | 26. Oktober 2010 | Kentischer, Florian |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

 

& : Mitglied der gleichen Patentfamilie, übereinstimmendes
Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 10 17 1875

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-10-2010

| Im Recherchenbericht angeführtes Patentdokument | Datum der Veröffentlichung | Mitglied(er) der Patentfamilie | Datum der Veröffentlichung |
|---|---|---|---|
| US 6597461 B1 | 22-07-2003 | KEINE | |
| DE 102004012094 A1 | 29-09-2005 | KEINE | |
| US 2010171393 A1 | 08-07-2010 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20050237134 A1
- WO 2006127285 A1
- US 20050068541 A1
- US 6188160 B
- WO 200106575 A1
- WO 2009104122 A1
- US 5158922 A
- EP 0654302 A1

**In der Beschreibung aufgeführte Nicht-Patentliteratur**

- **ROSSET, S. et al.** Metal Ion Implantation for the Fabrication of Stretchable Electrodes on Elastomers. *Adv. Funct. Mater,* 2009, vol. 19, 470-478